# EUROPEAN PATENT APPLICATION

(11) **EP 3 859 243 A1**
(43) Date of publication of application: **04.08.2021**
(21) Application number: 19868034.0
(22) Date of filing: 20.09.2019
(51) Int. Cl.: F25B 45/00, F25B 1/00

(54) **REFRIGERATION CYCLE DEVICE AND CONTROL METHOD THEREFOR**

(30) Priority: 28.09.2018 JP 2018184331
(71) Applicant: DAIKIN INDUSTRIES, LTD., Osaka 530-8323 (JP)
(72) Inventor: YAMADA, Takuro, Osaka 530-8323 (JP); YOSHIMI, Atsushi, Osaka 530-8323 (JP); KUMAKURA, Eiji, Osaka 530-8323 (JP); IWATA, Ikuhiro, Osaka 530-8323 (JP)
(74) Representative: Hoffmann Eitle
(86) International application number: PCT/JP2019/037051
(87) International publication number: WO 2020/066924

(57) **Abstract**

A refrigeration cycle apparatus is caused to be in a normally operable state in accordance with the mixture ratio of difluoromethane occupying a refrigerant charged in the refrigeration cycle apparatus. A refrigeration cycle apparatus (1) includes a refrigerant circuit (100) including a compressor (11) and performs a refrigeration cycle by circulating a refrigerant in the refrigerant circuit (100) with the compressor (11). Ajudgement unit of a heat-source-side controller (41) judges the mixture ratio of difluoromethane occupying the refrigerant charged in the refrigerant circuit (100). A control unit of the heat-source-side controller (41) performs control relating to the refrigeration cycle on the basis of the mixture ratio of difluoromethane judged by the judgement unit. The judgement unit judges the mixture ratio of difluoromethane on the basis of a discharge temperature of the refrigerant of the compressor (11) in operation under a prescribed condition or judges the mixture ratio of difluoromethane on the basis of weights of a plurality of types of refrigerants to be charged to the refrigerant circuit (100).

## Description

### Technical Field

The present disclosure relates to a refrigeration cycle apparatus in which a refrigeration cycle is to be performed by circulating a refrigerant, and a control method thereof.

### Background Art

A refrigeration cycle apparatus including a refrigerant circuit in which a refrigeration cycle is to be performed is applied to an air conditioning apparatus, a boiler, and the like. As described in, for example, PTL 1 (Japanese Unexamined Patent Application Publication No. 2003-240388), for a refrigeration cycle apparatus, an already installed pipe may be utilized when the refrigeration cycle apparatus is to be renewed. In the refrigeration cycle apparatus described in PTL 1, for example, a liquid refrigerant is collected and recovered in an outdoor heat exchanger of a heat source unit through pump down operation. Usually, the refrigerant recovered when the refrigerant cycle apparatus is renewed is carried to a factory and discarded or carried to a factory and regenerated.

### Summary of Invention

### Technical Problem

There are, however, a case in which two types of regular refrigerants are charged to a refrigerant circuit and a case in which a recovered refrigerant and a regular refrigerant are to be charged and mixed. In such cases, a ratio of difluoromethane may differ from the ratio of difluoromethane in the regular refrigerant in some refrigerants to be charged. A difference in the mixture ratio of difluoromethane occupying the refrigerant charged in a refrigeration cycle apparatus may change the state of the refrigeration cycle, although control of the refrigeration cycle apparatus does not change, and may make it impossible to keep a normal operation state.

An object of the present disclosure is to cause a refrigeration cycle apparatus to be in a normally operable state, in accordance with the mixture ratio of difluoromethane occupying a refrigerant charged in the refrigeration cycle apparatus.

### Solution to Problem

A refrigeration cycle apparatus according to a first aspect includes: a refrigerant circuit that includes a compressor and performs a refrigeration cycle by circulating a refrigerant with the compressor; a judgement unit that judges a mixture ratio of difluoromethane occupying a refrigerant charged in the refrigerant circuit; and a control unit that performs control relating to the refrigeration cycle. The judgement unit judges the mixture ratio of the difluoromethane, and the control unit performs the control relating to the refrigeration cycle based on the mixture ratio of the difluoromethane judged by the judgement unit.

In the refrigeration cycle apparatus according to the first aspect, the control relating to the refrigeration cycle is performed by the control unit on the basis of the mixture ratio of the difluoromethane judged by the judgement unit; it is thus possible to properly control the refrigeration cycle, and the refrigeration cycle apparatus can be kept in a normally operable state.

A refrigeration cycle apparatus according to a second aspect is the refrigeration cycle apparatus according to the first aspect in which the judgement unit judges the mixture ratio of the difluoromethane based on a discharge temperature of the refrigerant of the compressor in operation under a prescribed condition, or judges the mixture ratio of the difluoromethane based on weights of a plurality of types of refrigerants charged to the refrigerant circuit.

In the refrigeration cycle apparatus according to the second aspect, the mixture ratio of the difluoromethane to perform the control relating to the refrigeration cycle on the basis of the mixture ratio of the difluoromethane is judged by the judgement unit on the basis of a discharge temperature of a refrigerant of the compressor in operation under a prescribed condition or on the basis of the weights of a plurality of refrigerants to be charged to the refrigerant circuit. Consequently, judgement of the mixture ratio of the difluoromethane that affects the control relating to the refrigeration cycle can be easily performed by the judgement unit, and it is possible to easily keep the refrigeration cycle apparatus in a normally operable state.

A refrigeration cycle apparatus according to a third aspect is the refrigeration cycle apparatus according to the first aspect or the second aspect in which refrigerants to be charged to the refrigerant circuit are an R410A refrigerant and an R32 refrigerant, and in which the judgement unit judges the mixture ratio of the difluoromethane based on weights of the R410A refrigerant and the R32 refrigerant that are to be charged to the refrigerant circuit.

In the refrigeration cycle apparatus according to the third aspect, the judgement unit judges the mixture ratio of the difluoromethane on the basis of the weight of the R410a refrigerant and the weight of the R32 refrigerant; therefore, judgement of the mixture ratio of the difluoromethane is performed with accuracy. Consequently, the refrigeration cycle apparatus can perform the control relating to the refrigeration cycle with accuracy.

A refrigeration cycle apparatus according to a fourth aspect is the refrigeration cycle apparatus according to the third aspect in which the mixture ratio of the difluoromethane occupying the refrigerant charged in the refrigerant circuit is larger than a mixture ratio of pentafluoroethane occupying the refrigerant charged in the refrigerant circuit.

In the refrigeration cycle apparatus according to the fourth aspect, the mixture ratio of the difluoromethane occupying the refrigerant charged in the refrigerant circuit is larger than the mixture ratio of the pentafluoroethane; therefore, the characteristics of the refrigerant charged in the refrigerant circuit are greatly affected by R32. Thus, an effect of enabling the refrigeration cycle apparatus to maintain the normal operation of the refrigeration cycle becomes remarkable.

A refrigeration cycle apparatus according to a fifth aspect is the refrigeration cycle apparatus according to any of the first aspect to the fourth aspect in which the judgement unit judges the mixture ratio of the difluoromethane based on a composition and a weight of an initially charged refrigerant that has been previously charged before additional charge of a refrigerant at a time of installation of the refrigeration cycle apparatus, and a composition and a weight of an additionally charged refrigerant that is additionally charged at the time of installation.

In the refrigeration cycle apparatus according to the fifth aspect, the judgement unit judges the mixture ratio of the difluoromethane on the basis of the composition and the weight of the initially charged refrigerant and the composition and the weight of the additionally charged refrigerant; therefore, accuracy in the judgement of the mixture ratio of the difluoromethane is improved.

A refrigeration cycle apparatus according to a sixth aspect is the refrigeration cycle apparatus according to the fifth aspect in which the initially charged refrigerant is an R32 refrigerant, and the additionally charged refrigerant is an R410A refrigerant.

In the refrigeration cycle apparatus according to the sixth aspect, the initially charged refrigerant and the additionally charged refrigerant have been determined to be R32 and R410A, respectively; therefore, the judgement unit is not required to obtain information relating to the compositions. As a result, an operation of judging the mixture ratio of the difluoromethane can be simplified.

A refrigeration cycle apparatus according to a seventh aspect is the refrigeration cycle apparatus according to any of the first aspect to the sixth aspect in which a lowest number of revolutions of the compressor when the mixture ratio of the difluoromethane judged by the judgement unit is larger than a prescribed ratio is larger than the lowest number of revolutions when the mixture ratio is the prescribed ratio.

In the refrigeration cycle apparatus according to the seventh aspect, when the mixture ratio of the difluoromethane judged by the judgement unit is larger than the prescribed ratio, the lowest number of revolutions of the compressor is larger than the lowest number of revolutions when the mixture ratio is the prescribed ratio; therefore, the degree of dryness of the refrigerant sucked by the compressor does not excessively decrease. Consequently, the refrigeration cycle apparatus can keep the normally operable state.

A refrigeration cycle apparatus according to an eighth aspect is the refrigeration cycle apparatus according to any of the first aspect to the seventh aspect in which the compressor has an injection port between a suction side and a discharge side of a compression chamber and through which an intermediate-pressure refrigerant that is between a high-pressure refrigerant and a low-pressure refrigerant is injected, and in which, when the mixture ratio of the difluoromethane judged by the judgement unit is larger than 50 wt%, injection into the injection port is performed more frequently than when the mixture ratio of the difluoromethane is 50 wt%, and, when the mixture ratio of the difluoromethane is smaller than 100 wt%, the injection into the injection port is less frequently performed than when the mixture ratio of the difluoromethane is 100 wt%.

In the refrigeration cycle apparatus according to the eighth aspect, the discharge temperature from the compressor easily increases when the mixture ratio of the difluoromethane increases; the discharge temperature is, however, suppressed from excessively increasing, by injection being performed more frequently when the mixture ratio of the difluoromethane is large. As a result, a decrease in efficiency due to excessive injection is suppressed by the injection being performed less frequently when the mixture ratio of the difluoromethane is small.

A refrigeration cycle apparatus according to a ninth aspect is the refrigeration cycle apparatus according to any of the first aspect to the eighth aspect in which the refrigerant circuit includes an expansion valve in the refrigeration cycle, and in which, when the mixture ratio of the difluoromethane judged by the judgement unit is larger than 50 wt%, an opening degree of the expansion valve at a time of starting the compressor is smaller than when the mixture ratio of the difluoromethane is 50 wt%, and, when the mixture ratio of the difluoromethane is smaller than 100 wt%, the opening degree of the expansion valve at the time of starting the compressor is larger than when the mixture ratio of the difluoromethane is 100 wt%.

In the refrigeration cycle apparatus according to the ninth aspect, the carried amount of heat increases when the mixture ratio of the difluoromethane increases; therefore, the opening degree of the expansion valve at the time of starting the compressor is small when the mixture ratio of the difluoromethane is large, and the opening degree of the expansion valve at the time of starting becomes large when the mixture ratio of the difluoromethane is small. Consequently, the refrigeration cycle apparatus can operate properly even when the state of the refrigeration cycle changes due to a change in the amount of heat carried by the refrigerant.

A method of controlling a refrigeration cycle apparatus according to a tenth aspect is a method of controlling a refrigeration cycle apparatus including a refrigerant circuit that includes a compressor and performs a refrigeration cycle by circulating a refrigerant with the compressor. The method comprises a step of judging a mixture ratio of difluoromethane occupying the refrigerant charged in the refrigeration cycle, and a step of performing control relating to the refrigeration cycle based on the mixture ratio of the difluoromethane in the refrigerant. In the step of judging the mixture ratio of the difluoromethane. In the step of judging a mixture ratio of difluoromethane, the mixture ratio of the difluoromethane is judged on the basis of a discharge temperature of the refrigerant of the compressor in operation under a prescribed condition, or the mixture ratio of the difluoromethane is judged on the basis of weights of a plurality of types of refrigerants charged to the refrigerant circuit.

In the method of controlling the refrigeration cycle apparatus according to the tenth aspect, the mixture ratio of the difluoromethane is judged, and the control relating to the refrigeration cycle is performed on the basis of the mixture ratio of the difluoromethane; therefore, the refrigeration cycle can be properly controlled. As a result, the refrigeration cycle apparatus can keep a normally operable state.

### Brief Description of Drawings

Fig. 1 is a refrigerant circuit diagram illustrating an outline of the configuration of a refrigeration cycle apparatus according to an embodiment.
Fig. 2 is a schematic diagram for describing transfer of a refrigerant from a first heat source unit to a second heat source unit.
Fig. 3 is a schematic diagram for describing measurement of the weight of a refrigerant transferred from the first heat source unit to the second heat source unit.
Fig. 4 is a flowchart illustrating part of a flow of controlling the refrigeration cycle apparatus.
Fig. 5 is a block diagram illustrating an outline of a control system of the refrigeration cycle apparatus.
Fig. 6 is a schematic diagram for describing measurement of the weight of an R32 refrigerant.
Fig. 7 is a schematic diagram for describing measurement of the weight of a refrigerant in a modification IF.
Fig. 8 is a schematic diagram for describing measurement of the weight of the refrigerant in the modification IF.
Fig. 9 is a schematic diagram for describing measurement of the weight of a refrigerant in a modification 1G.
Fig. 10 is a schematic diagram for describing measurement of the weight of a refrigerant in a modification 1H.
Fig. 11 is a conceptual diagram for describing transport of the second heat source unit.
Fig. 12 is a graph for describing judgement of the mixture ratio of difluoromethane in a modification 1L.

### Description of Embodiments

### (1) Overall Configuration

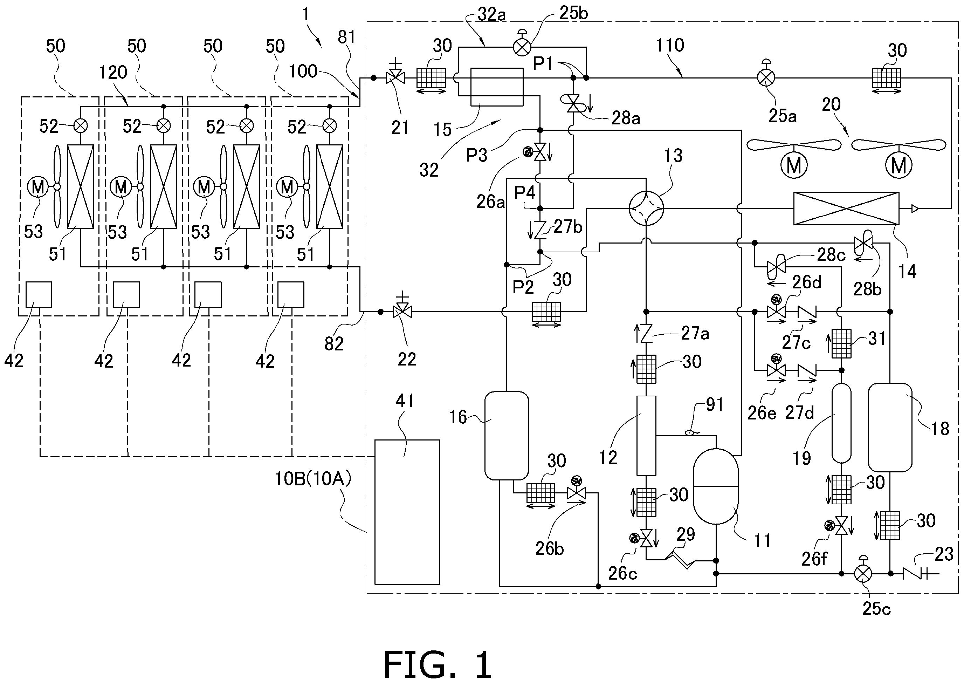

In Fig. 1, an example of the configuration of a refrigeration cycle apparatus that is an object of a refrigerant charging method is illustrated. A refrigeration cycle apparatus 1 illustrated in Fig. 1 is an apparatus in which a refrigeration cycle is to be performed by a refrigerant that circulates in a refrigerant circuit 100. The refrigeration cycle apparatus 1 repeats a cycle of compression of the refrigerant, heat radiation from the refrigerant, decompression expansion of the refrigerant, and heat absorption into the refrigerant. The refrigeration cycle apparatus 1 includes a first heat source unit 10A or a second heat source unit 10B switchable to have a function of heat radiation or to have a function of heat absorption in the refrigeration cycle, and a utilization unit 50 connected to the first heat source unit 10A or the second heat source unit 10B. Here, the first heat source unit 10A is a heat source unit before renewal, and the second heat source unit 10B is a heat source unit after renewal.

The utilization unit 50 cools an object by utilizing heat absorption of the refrigerant when the first heat source unit 10A or the second heat source unit 10B is a heat source whose heat is radiated from the refrigerant. The utilization unit 50 heats an object by utilizing heat radiation of the refrigerant when the first heat source unit 10A or the second heat source unit 10B is a heat source whose heat is absorbed by the refrigerant.

The refrigerant that circulates in the first heat source unit 10A and the second heat source unit 10B is, for example, a mixed refrigerant, such as an R410A refrigerant, including difluoromethane and pentafluoroethane. A case in which the mixed refrigerant is an R410A refrigerant and the refrigerant additionally charged at the time of renewal is an R32 refrigerant is presented as an example and described here. The R410A refrigerant is a mixed refrigerant of difluoromethane and pentafluoroethane, and a later-described recovered refrigerant is also a mixed refrigerant, as with the R410A refrigerant. The R32 refrigerant is a single refrigerant of fluoromethane.

The first heat source unit 10A, the second heat source unit 10B, and the refrigeration cycle apparatus 1 including one of them have a spec compatible with the mixed refrigerant including difluoromethane and pentafluoroethane.

The refrigeration cycle apparatus 1 is applicable to an air conditioning apparatus that performs cooling and heating. In this case, for example, the first heat source unit 10A or the second heat source unit 10B serves as an outdoor unit of the air conditioning apparatus, and the utilization unit 50 serves as an indoor unit of the air conditioning apparatus. The utilization unit 50 that is the indoor unit cools or heats air in an air-conditioning object space to perform cooling or heating. Note that, although a case in which the refrigeration cycle apparatus 1 is applied to an air conditioning apparatus is presented as an example and described here, the refrigeration cycle apparatus is also applicable to other apparatuses and applicable to, for example, a heat pump boiler, a refrigerator, and a cooling apparatus that cools the inside of a chamber.

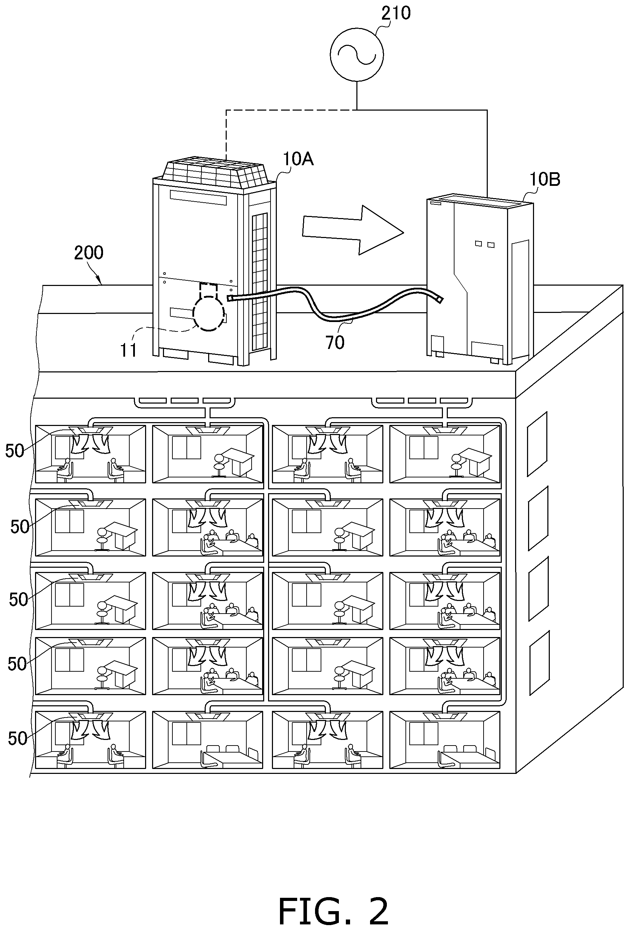

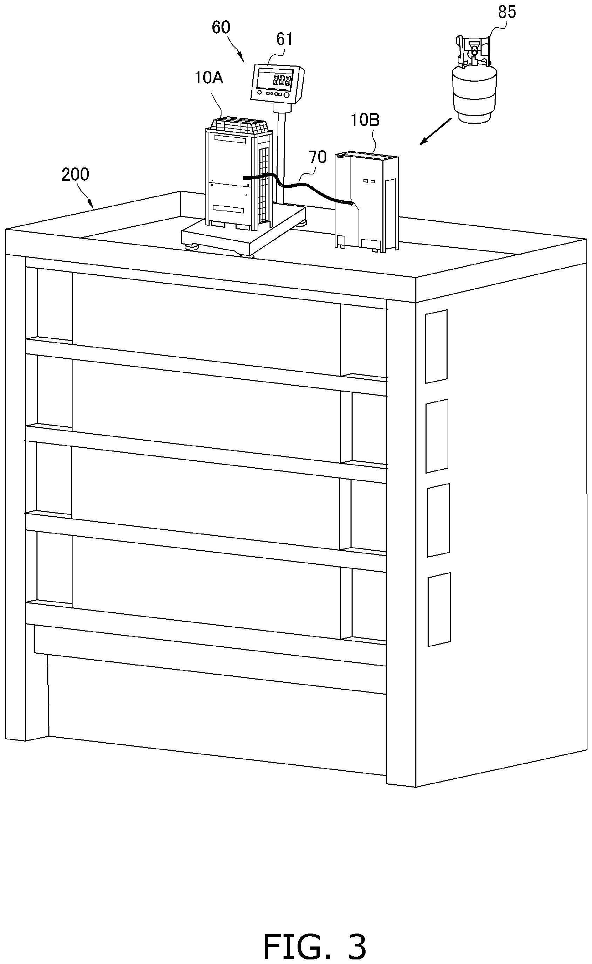

In Fig. 2 and Fig. 3, regarding a case in which the refrigeration cycle apparatus 1 is an air conditioning apparatus, an example in which the refrigeration cycle apparatus 1 is installed at a building 200 is illustrated. In the example illustrated in Fig. 2, the first heat source unit 10A or the second heat source unit 10B is installed at the rooftop of the building 200. As illustrated in Fig. 2, a plurality of utilization units 50 are installed in respective rooms to perform air conditioning of each room in the building 200.

The above-described already installed refrigeration cycle apparatus 1, which will be described below, includes the refrigerant circuit 100 that performs a refrigeration cycle by circulating a refrigerant. The refrigerant circuit 100 includes a compressor 11 for circulating the refrigerant. The refrigeration cycle apparatus 1 includes a heat-source-side controller 41 that controls the operation of the first heat source unit 10A or the second heat source unit 10B, and utilization-side controllers 42 that controls the operation of the utilization unit 50.

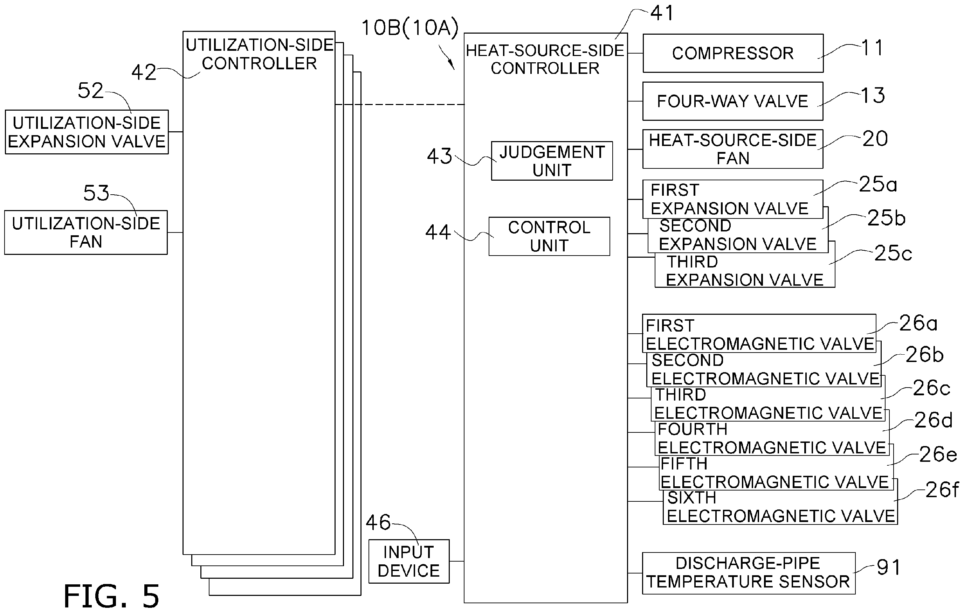

As illustrated in Fig. 5, the heat-source-side controller 41 of the second heat source unit 10B includes a judgement unit 43 that judges the mixture ratio of difluoromethane occupying the refrigerant charged in the refrigerant circuit 100, and a control unit 44 that performs control relating to the refrigeration cycle on the basis of the mixture ratio of difluoromethane judged by the judgement unit 43. The judgement unit 43 has a function of judging the mixture ratio of difluoromethane on the basis of the weights of a plurality of types of refrigerants charged to the refrigerant circuit 100.

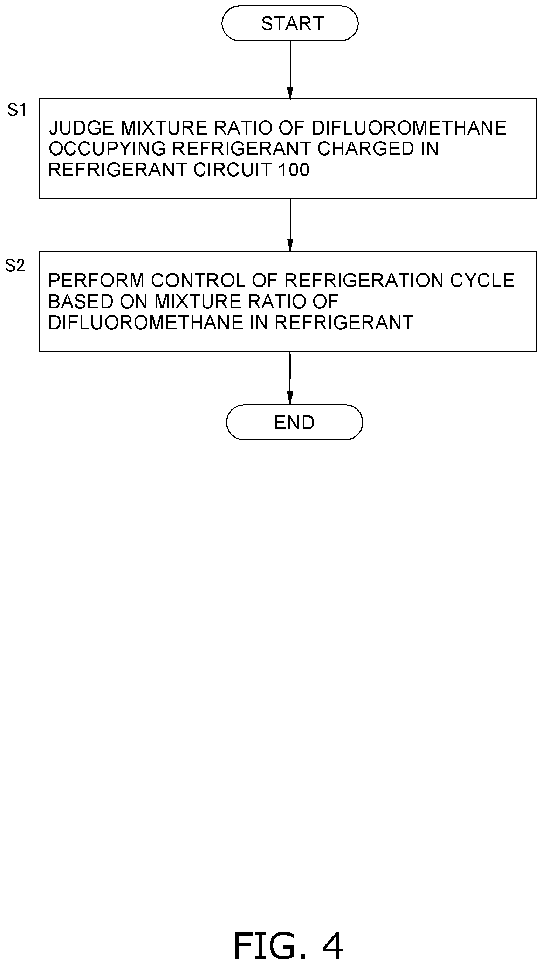

As described in the flowchart in Fig. 4, the refrigeration cycle apparatus 1 includes, in the control, a step S1 of judging the mixture ratio of difluoromethane occupying the refrigerant charged in the refrigerant circuit 100, and a step S2 of performing control of the refrigeration cycle on the basis of the mixture ratio of difluoromethane in the refrigerant. In the step S2, the judgement unit 43 judges the mixture ratio of difluoromethane on the basis of the weights of the plurality of types of refrigerants charged to the refrigerant circuit 100.

As a case in which the mixture ratio of difluoromethane occupying the mixed refrigerant is changed, a case in which the first heat source unit 10A is changed to the second heat source unit 10B in the refrigeration cycle apparatus 1 is presented as example and described here.

In Fig. 2 and Fig. 3, the first heat source unit 10A before renewal included in the already installed refrigeration cycle apparatus 1 and the second heat source unit 10B that is planned to be included in the refrigeration cycle apparatus 1 after renewal are illustrated. In other words, the first heat source unit 10A is an old heat source unit, and the second heat source unit 10B is a new heat source unit. The already installed refrigeration cycle apparatus 1 has already been installed at the building 200 and has an experience of performing a refrigeration cycle by circulating a refrigerant before renewal. The refrigerant is present in each of the first heat source unit 10A and the plurality of utilization units 50 included in the refrigeration cycle apparatus 1. Here, a refrigerant that is included in the inner portion of the refrigeration cycle apparatus 1 for the purpose of circulating in the refrigerant circuit 100 is referred to as a circulating refrigerant.

In a state in which the circulating refrigerant of the refrigeration cycle apparatus 1 has been transferred to the first heat source unit 10A through pump down operation, the first heat source unit 10A is detached from the refrigeration cycle apparatus 1 at the rooftop of the building 200. When the first heat source unit 10A is to be detached, a high-pressure-side shutoff valve 21 and a low-pressure-side shutoff valve 22 of the first heat source unit 10A are closed.

Next, the second heat source unit 10B is incorporated in the refrigeration cycle apparatus 1. With respect to the refrigeration cycle apparatus 1 after renewal in which the second heat source unit 10B is incorporated, for example, airtightness of the refrigeration cycle apparatus 1 is inspected. After the airtightness of the refrigeration cycle apparatus 1 is confirmed, the refrigeration cycle apparatus 1 is evacuated by a vacuum pump.

In Fig. 2, a state in which a refrigerant is transferred from the first heat source unit 10A to the second heat source unit 10B is schematically illustrated. In a state of being incorporated in the refrigeration cycle apparatus 1 that is after renewal, the second heat source unit 10B is connected to a power source 210 and in a drivable state. The first heat source unit 10A and the second heat source unit 10B are connected to each other by a charge hose 70. In response to the second heat source unit 10B being driven, the R410A refrigerant is transferred from the first heat source unit 10A through the charge hose 70 to the second heat source unit 10B. Through this transfer of the refrigerant from the first heat source unit 10A to the second heat source unit 10B, a recovered refrigerant is obtained. At this time, the first heat source unit 10A is, for example, in a state of being temporarily placed at the rooftop of the building 200 and is not connected to the power source 210.

In Fig. 3, a state in which the weight of the recovered refrigerant recovered in the second heat source unit 10B from the first heat source unit 10A is measured is illustrated. The weight of the first heat source unit 10A is measured by a scale 61. The scale 61 measures the recovered refrigerant recovered from the first heat source unit 10A by measuring the weight of the first heat source unit 10A both of before the recovered refrigerant is transferred from the first heat source unit 10A and after the recovered refrigerant is transferred from the first heat source unit 10A. The weight of the recovered refrigerant can be calculated by subtracting a measured value obtained by the scale 61 regarding the first heat source unit 10A that is before transfer of the recovered refrigerant from the first heat source unit 10A from a measured value obtained by the scale 61 regarding the first heat source unit 10A that is after transfer of the recovered refrigerant from the first heat source unit 10A.

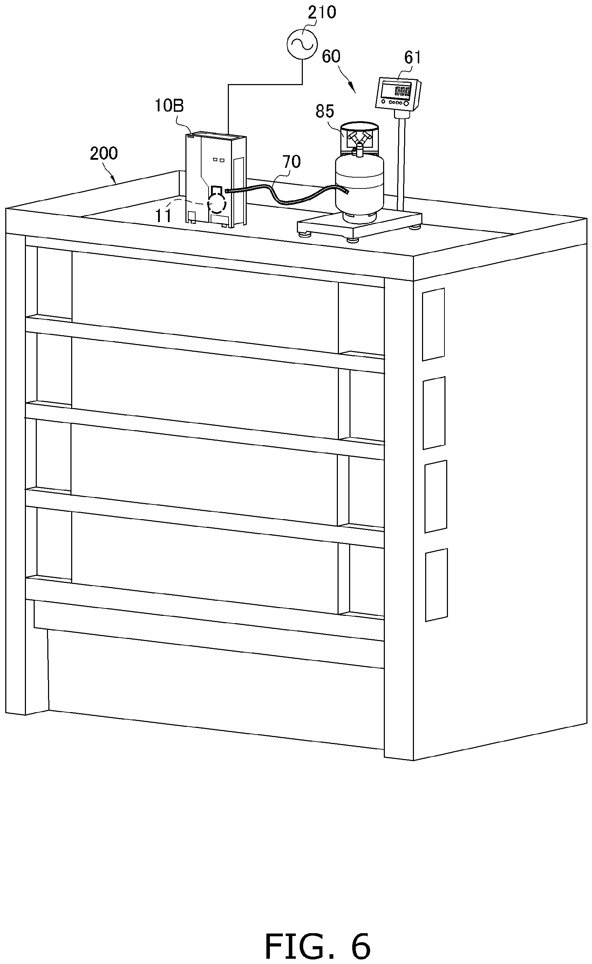

As a result of the second heat source unit 10B to which the recovered refrigerant has been transferred being incorporated in the refrigeration cycle apparatus 1, transfer of the recovered refrigerant to the refrigeration cycle apparatus 1 is completed. As illustrated in Fig. 6, the R32 refrigerant is charged as an additional refrigerant to the refrigeration cycle apparatus 1 to which the recovered refrigerant (mixed refrigerant) has been transferred. The method of transferring the R32 refrigerant from a cylinder 85 to the second heat source unit 10B is the same as the method of transferring the recovered refrigerant from the first heat source unit 10A to the second heat source unit 10B.

The gross weight of the refrigerants proper for the refrigeration cycle apparatus 1 after renewal in which the second heat source unit 10B is incorporated can be previously calculated by using data of the already installed refrigeration cycle apparatus 1 in which the first heat source unit 10A is incorporated. It is possible to obtain the weight of a lacking refrigerant and to determine the charge amount of the R32 refrigerant by subtracting the weight of the recovered refrigerant measured by a measurement system 60 from the gross weight of the refrigerants proper for the refrigeration cycle apparatus 1 after renewal. As illustrated in Fig. 6, the charge amount of the R32 refrigerant added to the second heat source unit 10B can be detected through measurement of a decrease in the weight of the cylinder 85 by the scale 61.

### (2) Detailed Configuration

### (2-1) Configuration of Refrigeration Cycle Apparatus 1

In the refrigeration cycle apparatus 1 illustrated in Fig. 1, one first heat source unit 10A or one second heat source unit 10B and a plurality of the utilization units 50 are connected by connection pipes 81 and 82. In the refrigeration cycle apparatus 1, a heat-source-side circuit 110 in the first heat source unit 10A or the second heat source unit 10B and a utilization-side circuit 120 in each utilization unit 50 are connected to each other, thereby configuring the refrigerant circuit 100. In the refrigeration cycle apparatus 1, circulation of the refrigerant in the refrigerant circuit 100 causes a vapor compression refrigeration cycle to repeat. An example in which the refrigeration cycle apparatus 1 is applied to an air conditioning apparatus will be described here.

### (2-1-1) First Heat Source Unit 10A, Second Heat Source Unit 10B

To simplify the description, a case in which the first heat source unit 10A before renewal and the second heat source unit 10B after renewal have the same configuration will be described here; however, the technology according to the present disclosure is applicable even when the configurations thereof are not same. For example, as illustrated in Fig. 1, each of the first heat source unit 10A and the second heat source unit 10B includes the compressor 11, an oil separator 12, a four-way valve 13, a heat-source-side heat exchanger 14, a subcooling heat exchanger 15, an accumulator 16, a refrigerant regulator 18, an oil regulator 19, a heat-source-side fan 20, the high-pressure-side shutoff valve 21, the low-pressure-side shutoff valve 22, a charge port 23, a first expansion valve 25a to a third expansion valve 25c, a first electromagnetic valve 26a to a sixth electromagnetic valve 26f, a first check valve 27a to a fourth check valve 27d, a first pressure regulating valve 28a to a third pressure regulating valve 28c, a capillary tube 29, a plurality of filters 30, and a strainer 31.

The heat-source-side heat exchanger 14 is, for example, a fin-and-tube heat exchanger and exchanges heat between air and a refrigerant. As the subcooling heat exchanger 15, for example, a plate heat exchanger is usable. The first electromagnetic valve 26a to the sixth electromagnetic valve 26f each have a function of opening and closing a flow path. The first pressure regulating valve 28a to the third pressure regulating valve 28c each have a function of keeping the pressure of the refrigerant on the upstream side at a prescribed absolute pressure that is previously determined. The tips of the arrows given to the first pressure regulating valve 28a to the third pressure regulating valve 28c indicate the downstream side of the first pressure regulating valve 28a to the third pressure regulating valve 28c. The filters 30 each have a function of removing a foreign material from the refrigerant that passes therethrough. The strainer 31 has a function of removing a solid component from the refrigerant.

The discharge side of the compressor 11 is connected to the first port of the four-way valve 13 via the oil separator 12 and the first check valve 27a. The refrigerant discharged from the compressor 11 is separated from oil at the oil separator 12 and flows toward the first port of the four-way valve 13. The second port of the four-way valve 13 is connected to one entrance of the heat-source-side heat exchanger 14, the third port of the four-way valve 13 is connected to an inlet of the accumulator 16, and the fourth port of the four-way valve 13 is connected to the low-pressure-side shutoff valve 22. In the four-way valve 13, the first port and the second port are in communication with each other while the third port and the fourth port are in communication with each other, as indicated by solid lines, during cooling operation, and the first port and the fourth port are in communication with each other while the second port and the third port are in communication with each other, as indicated by broken lines, during heating operation.

The other entrance of the heat-source-side heat exchanger 14 is connected to one end of the first expansion valve 25a and connected to the high-pressure-side shutoff valve 21 via the first expansion valve 25a. The subcooling heat exchanger 15 is installed between the other end of the first expansion valve 25a and the high-pressure-side shutoff valve 21. The first expansion valve 25a is provided on the liquid side of the heat-source-side heat exchanger 14 and able to regulate the degree of decompression of the refrigerant that passes therethrough. The subcooling heat exchanger 15, a subcooling circuit 32a, and a second expansion valve 25b constitute a subcooling portion 32. The subcooling circuit 32a diverges from a diverging point P1 at a part extending from the other end of the first expansion valve 25a toward the high-pressure-side shutoff valve 21 and is connected, through the subcooling heat exchanger 15, to a merging point P2 between the four-way valve 13 and the accumulator 16. The second expansion valve 25b provided between the diverging point P1 and the subcooling heat exchanger 15 is able to regulate the degree of decompression of the refrigerant that passes through the subcooling circuit 32a. The subcooling heat exchanger 15 causes heat to be exchanged between the refrigerant that flows between the diverging point P1 and the high-pressure-side shutoff valve 21 and the refrigerant that flows from the diverging point P1 toward the merging point P2 in the subcooling circuit 32a.

A diverging point P3, the first electromagnetic valve 26a, a merging point P4, and the second check valve 27b are provided in this order from the subcooling heat exchanger 15 toward the merging point P2 in the subcooling circuit 32a. The diverging point P1 and the merging point P4 are connected to each other via the first pressure regulating valve 28a, and the refrigerant flows from the diverging point P1 toward the merging point P4. The diverging point P3 is connected to an injection port of the compressor 11. Accordingly, an intermediate-pressure refrigerant decompressed at the second expansion valve 25b exits from the subcooling heat exchanger 15, diverges on the upstream of the first electromagnetic valve 26a, and flows into the injection port of the compressor 11.

One outlet of the accumulator 16 is directly connected to the suction side of the compressor 11 to return a gas refrigerant to the suction side of the compressor 11, and the other outlet of the accumulator 16 is connected for oil-returning to the suction side of the compressor 11 via the filters 30 and the second electromagnetic valve 26b. Between the suction side of the compressor 11 and the oil separator 12, a path that passes the filters 30, the third electromagnetic valve 26c, and the capillary tube 29 is formed to return the separated oil to the compressor 11.

One entrance of the refrigerant regulator 18 is connected to the suction side of the compressor 11 via the third expansion valve 25c. The refrigerant regulator 18 is a device that regulates the amount of the refrigerant that flows in the refrigerant circuit 100. The other entrance of the refrigerant regulator 18 is connected to the merging point P2 via the second pressure regulating valve 28b. The outflow side of the first check valve 27a is connected to the other entrance of the refrigerant regulator 18 via the fourth electromagnetic valve 26d and the third check valve 27c. The refrigerant regulator 18 has a function of keeping the amount of the refrigerant that flows in the refrigerant circuit 100 to be constant.

One entrance of the oil regulator 19 is connected to the suction side of the compressor 11 via the sixth electromagnetic valve 26f. The other entrance of the oil regulator 19 is connected to the merging point P2 via the third pressure regulating valve 28c. The outflow side of the first check valve 27a is connected to the other entrance of the oil regulator 19 via the fifth electromagnetic valve 26e and the fourth check valve 27d. The oil regulator 19 has a function of keeping the amount of oil supplied to the refrigerant circuit 100 to be constant.

The heat-source-side fan 20 is disposed at the heat-source-side heat exchanger 14. The heat-source-side fan 20 causes an airflow for accelerating heat exchange to be generated in the heat-source-side heat exchanger 14.

The filters 30 are provided between the oil separator 12 and the first check valve 27a, between the heat-source-side heat exchanger 14 and the first expansion valve 25a, between the subcooling heat exchanger 15 and the high-pressure-side shutoff valve 21, between the fourth port of the four-way valve 13 and the low-pressure-side shutoff valve 22, between the other outlet of the accumulator 16 and the second electromagnetic valve 26b, between the oil separator 12 and the third electromagnetic valve 26c, between the third expansion valve 25c and the refrigerant regulator 18, and between the oil regulator 19 and the sixth electromagnetic valve 26f. The strainer 31 is provided between the oil regulator 19 and the third pressure regulating valve 28c. The charge port 23 is provided between the third expansion valve 25c and the filters 30.

### (2-1-2) Utilization Units 50

As illustrated in Fig. 1, each of the utilization units 50 includes, for example, a utilization-side heat exchanger 51, a utilization-side expansion valve 52, and a utilization-side fan 53. The utilization-side heat exchanger 51 is, for example, a fin-and-tube heat exchanger and causes heat to be exchanged between air and a refrigerant. The utilization-side expansion valve 52 and the utilization-side heat exchanger 51 are series connected between the liquid-side connection pipe 81 and the gas-side connection pipe 82. The utilization-side expansion valve 52 and the utilization-side heat exchanger 51 are disposed in the order of the utilization-side expansion valve 52 and the utilization-side heat exchanger 51 from the liquid-side connection pipe 81 toward the gas-side connection pipe 82. The utilization-side fan 53 is disposed at each utilization-side heat exchanger 51. The utilization-side fan 53 causes an airflow for accelerating heat exchange to be generated in the utilization-side heat exchanger 51. The plurality of utilization units 50 parallel connected between the liquid-side connection pipe 81 and the gas-side connection pipe 82 constitute the utilization-side circuit 120.

### (2-1-3) Control System of Second Heat Source Unit 10B

As illustrated in Fig. 5, a control system 40 of the second heat source unit 10B of the refrigeration cycle apparatus 1 is configured to include a heat-source-side controller 41 and utilization-side controllers 42. A case in which a plurality of the utilization-side controllers 42 are provided is described here since there are a plurality of the utilization units 50; however, if one utilization unit 50 is provided, one utilization-side controller 42 is sufficient. The controllers may not be separated as with the heat-source-side controller 41 and the utilization-side controllers 42 and may be combined into one controller.

The heat-source-side controller 41 includes the judgement unit 43 and the control unit 44. The heat-source-side controller 41 controls the compressor 11, the four-way valve 13, the heat-source-side fan 20, the first expansion valve 25a to the third expansion valve 25c, the first electromagnetic valve 26a to the sixth electromagnetic valve 26f and performs control relating to the refrigeration cycle. The utilization-side controllers 42 control the utilization-side expansion valves 52 and the utilization-side fans 53 and performs control relating to the refrigeration cycle.

In the aforementioned embodiment, the heat-source-side controller 41 and the utilization-side controllers 42 can be configured to perform control by interpreting and executing an executable program and data stored in a memory by a CPU. The program and the data may be introduced into the memory via a storage medium or may be directly executed from the storage medium. Introduction of the program and the data from the storage medium to the memory may be performed via a telephone line, a carrying path, or the like. The heat-source-side controller 41 and the utilization-side controllers 42 may be configured by using an integrated circuit (IC) capable of performing control similar to control that is performed by using the CPU and the memory. The IC mentioned here includes a LSI (large-scale integrated circuit), an ASIC (application-specific integrated circuit), a gate array, a FPGA (field programmable gate array), and the like.

The heat-source-side controller 41 and the utilization-side controllers 42 each include a plurality of temperature sensors, a plurality of pressure sensors, and the like; however, a discharge temperature sensor 91, which is necessary for describing the technology of the present disclosure, is described here, and description of the other sensors is omitted. The heat-source-side controller 41 is configured to be able to estimate the discharge temperature of the refrigerant of the compressor 11 on the basis of a value detected by the discharge temperature sensor 91.

The refrigeration cycle apparatus 1 includes an input device 46 in the control system 40, and the heat-source-side controller 41 is connected to the input device 46. An operator can input the weight of the recovered refrigerant and the weight of the R32 refrigerant through the input device 46. The heat-source-side controller 41 is able to calculate the weight of difluoromethane occupying the circulating refrigerant from the weight of the recovered refrigerant and the weight of the R32 refrigerant that have been inputted. For example, when the recovered refrigerant is the R410A refrigerant, the judgement unit 43 considers the mixture ratio of difluoromethane and the mixture ratio of pentafluoroethane as 50 wt% and 50 wt%, respectively, calculates the mixture ratio of difluoromethane occupying the circulating refrigerant from the weight of the recovered refrigerant and the weight of the R32 refrigerant, and judges the mixture ratio of difluoromethane.

### (2-1-4) Cooling Operation

In cooling operation, the refrigeration cycle apparatus 1 causes the four-way valve 13 to be in the state indicated by the solid lines, in other words, in a state in which the first port and the second port are in communication each other while the third port and the fourth port are in communication with each other. In the refrigeration cycle performed in cooling operation, the heat-source-side heat exchanger 14 functions as a radiator, and the utilization-side heat exchanger 51 functions as an evaporator. The refrigerant discharged from the compressor 11 successively circulates in the heat-source-side heat exchanger 14, the utilization-side expansion valves 52, and the utilization-side heat exchangers 51 and repeats the vapor compression refrigeration cycle of compression, condensation, expansion, and evaporation.

The refrigeration cycle apparatus 1 controls the operation frequency of the compressor 11 to cause the evaporation pressure or the evaporation temperature in the utilization-side heat exchanger 51 to be a target pressure or a target evaporation temperature and controls the valve opening degree of each utilization-side expansion valve 52 to cause the degree of superheating of the refrigerant that flows on the gas side of the utilization-side heat exchanger 51 to be a target degree of superheating. In cooling operation, the first expansion valve 25a is in a fully opened state. The refrigeration cycle apparatus 1 regulates the opening degree of the second expansion valve 25b to cause the degree of superheating of the refrigerant that has exited from the subcooling heat exchanger 15 to be a target degree of superheating. When a prescribed condition is satisfied, the refrigeration cycle apparatus 1 causes the refrigerant that flows in the subcooling circuit 32a to exchange heat in the subcooling heat exchanger 15 with the refrigerant that flows between the diverging point P1 and the high-pressure-side shutoff valve 21 and to become a gas refrigerant having an intermediate pressure and supplies the refrigerant through the injection port to a compression chamber of the compression mechanism of the compressor 11 in the middle of compression. The compressor 11 that has been supplied with the gas refrigerant having the intermediate pressure can decrease the discharge temperature more than when the gas refrigerant is not injected.

### (2-1-5) Heating Operation

In heating operation, the refrigeration cycle apparatus 1 causes the four-way valve 13 to be in the state indicated by the broken lines, in other words, in a state in which the first port and the fourth port are in communication with each other while the second port and the third port are in communication with each other. In the refrigeration cycle performed in heating operation, the heat-source-side heat exchanger 14 functions as an evaporator, and the utilization-side heat exchanger 51 functions as a radiator. The refrigerant discharged from the compressor 11 successively circulates in the utilization-side heat exchanger 51, the first expansion valve 25a, and the heat-source-side heat exchanger 14 and repeats the vapor compression refrigeration cycle of compression, condensation, expansion, and evaporation.

In heating operation, the second expansion valve 25b is a fully closed state. The refrigeration cycle apparatus 1 controls the operation frequency of the compressor 11 to cause the condensation temperature in the utilization-side heat exchanger 51 to be a target condensation temperature and controls the valve opening degree of the utilization-side expansion valve 52 to cause the degree of subcooling of the refrigerant that flows on the liquid side of the utilization-side heat exchanger 51 to be a target degree of subcooling. The refrigeration cycle apparatus 1 controls the valve opening degree of the first expansion valve 25a to cause the degree of superheating of the refrigerant that flows on the gas side of the heat-source-side heat exchanger 14 to be a target degree of superheating.

### (2-2) Measurement System 60

The measurement system 60 includes the scale 61, which is illustrated in Fig. 3. The scale 61 is, for example, a platform scale or a crane scale. The scale 61 has a function capable of measuring the weight of the first heat source unit 10A or the second heat source unit 10B and has resolving power sufficient for detecting the weight of the refrigerant.

### (2-3) Transfer of Refrigerant

In the transfer of the refrigerant from the first heat source unit 10A to the second heat source unit 10B, for example, with the first heat source unit 10A being incorporated in the refrigeration cycle apparatus 1 and being in a movable state, the refrigerant of the utilization-side circuit 120 is transferred to the heat-source-side circuit 110 of the first heat source unit 10A through pump down operation. Then, the high-pressure-side shutoff valve 21 and the low-pressure-side shutoff valve 22 of the first heat source unit 10A are closed. Then, after the pump down operation, with the high-pressure-side shutoff valve 21 and the low-pressure-side shutoff valve 22 of the first heat source unit 10A closed, the first heat source unit 10A is detached and made to be in a temporarily placed state. In the pump down operation, for example, the high-pressure-side shutoff valve 21 is closed, and the first heat source unit 10A is operated to perform cooling. The high-pressure-side shutoff valve 21 is closed, and operation in which the heat-source-side heat exchanger 14 of the first heat source unit 10A functions as a condenser is performed. When the pressure of the low-pressure-side shutoff valve 22 becomes sufficiently low, the low-pressure-side shutoff valve 22 is closed.

Next, the first heat source unit 10A is detached from the refrigeration cycle apparatus 1, and the second heat source unit 10B is incorporated in the refrigeration cycle apparatus 1. Then, as illustrated in Fig. 2, a service port of the high-pressure-side shutoff valve 21 of the first heat source unit 10A and the charge port 23 of the second heat source unit 10B are connected to each other by the charge hose 70. Here, a means of transferring the refrigerant includes the charge hose 70. The second heat source unit 10B is operated to drive the compressor 11, and the refrigerant is transferred through the service port of the high-pressure-side shutoff valve 21 of the first heat source unit 10A into the charge port 23 of the second heat source unit 10B. When the second heat source unit 10B is to be operated to drive the compressor 11, the third expansion valve 25c is closed, cooling operation is performed, and the recovered refrigerant is sucked along a path in which the recovered refrigerant is sucked from the refrigerant regulator 18 by the compressor 11 through the accumulator 16. By detaching the charge hose 70 from the charge port 23 and the service port of the high-pressure-side shutoff valve 21, the charge port 23 and the service port of the high-pressure-side shutoff valve 21 are closed.

### (2-4) Control Relating to Refrigeration Cycle Based on Mixture Ratio of Difluoromethane

When the mixture ratio of difluoromethane judged by the judgement unit 43 is larger than a prescribed ratio, the refrigeration cycle apparatus 1 is operated in a state in which the lowest number of revolutions of the compressor 11 is larger than when the mixture ratio of difluoromethane is the prescribed ratio.

The prescribed ratio is considered, for example, such that the mixture ratio of difluoromethane is 50 wt% and the mixture ratio of pentafluoroethane is 50 wt%. At this time, when the judgement unit 43 judges that the mixture ratio of difluoromethane is 60 wt% and that the mixture ratio of pentafluoroethane is 40 wt%, the refrigeration cycle apparatus 1 is operated in a state in which the lowest number of revolutions of the compressor 11 is larger than when each of the mixture ratio of difluoromethane and the mixture ratio of pentafluoroethane is the prescribed ratio.

The control unit 44 is thus configured to change the control to control that increases the set lowest number of revolutions of the compressor 11 more, for example, when the mixture ratio of difluoromethane is larger than the prescribed ratio than when the mixture ratio of difluoromethane is the prescribed ratio. The control unit 44 may be configured to, for example, increase the set lowest number of revolutions of the compressor 11 by a prescribed percent that is more when the mixture ratio of difluoromethane is 60 wt% and the mixture ratio of pentafluoroethane is 40 wt% than when the mixture ratio of difluoromethane is 50 wt% and the mixture ratio of pentafluoroethane is 50 wt%. To realize such a configuration, the control unit 44 stores a table in which the relationship between the set value of the lowest number of revolutions and the mixture ratio of difluoromethane is described, and the control unit 44 changes control in accordance with the table. Alternatively, the control unit 44 stores a mathematical expression that prescribes the relationship between the set value of the lowest number of revolutions and the mixture ratio of difluoromethane, and the control unit 44 can be configured to change control in accordance with the mathematical expression.

The already described compressor 11 of the refrigeration cycle apparatus 1 has an injection port between the suction side and the discharge side in the compression chamber and through which an intermediate-pressure refrigerant that is between a high-pressure refrigerant and a low-pressure refrigerant is injected. When the mixture ratio of difluoromethane judged by the judgement unit 43 is larger than 50 wt%, operation is performed in a state in which injection into the injection port of the compressor 11 is more frequently performed than when the mixture ratio of difluoromethane is 50 wt%, and, when the mixture ratio of difluoromethane is smaller than 100 wt%, operation is performed in a state in which injection into the injection port is less frequently performed than when the mixture ratio of difluoromethane is 100 wt%.

The control unit 44 is thus configured to, when judging whether to perform injection by judging whether the discharge temperature of the compressor 11 exceeds the set threshold of the discharge temperature, change the control to control that decreases the set threshold of the discharge temperature more when, for example, the mixture ratio of difluoromethane is larger than 50 wt% than when the mixture ratio of difluoromethane is 50 wt%. The control unit 44 is also configured to change the control to control that increases the set threshold value of the discharge temperature more when, for example, the mixture ratio of difluoromethane is smaller than 100 wt% than when the mixture ratio of difluoromethane is 100 wt%.

The control unit 44 may be configured to increase the set threshold of the discharge temperature by a prescribed percent that is more when, for example, the mixture ratio of difluoromethane is 60 wt% and the mixture ratio of pentafluoroethane is 40 wt% than when the mixture ratio of difluoromethane is 50 wt% and the mixture ratio of pentafluoroethane is 50 wt%. The control unit 44 may be configured to decrease the set threshold of the discharge temperature by a prescribed percent that is more when, for example, the mixture ratio of difluoromethane is 80 wt% and the mixture ratio of pentafluoroethane is 20 wt% than when the mixture ratio of difluoromethane is 100 wt%. To realize such a configuration, the control unit 44 stores a table in which the relationship between the set threshold of the discharge temperature and the mixture ratio of difluoromethane is described, and the control unit 44 changes control in accordance with the table. Alternatively, the control unit 44 stores a mathematical expression that prescribes the relationship between the set threshold of the discharge temperature and the mixture ratio of difluoromethane, and the control unit 44 can be configured to change control in accordance with the mathematical expression.

Alternatively, the control unit 44 is configured to change, when judging whether to perform injection by judging whether the number of revolutions of the compressor 11 exceeds the set number of revolutions, the control to control that decreases the set number of revolutions more when, for example, the mixture ratio of difluoromethane is larger than 50 wt% than when the mixture ratio of difluoromethane is 50 wt%. The control unit 44 is also configured to change the control to control that increases the set number of revolutions more when, for example, the mixture ratio of difluoromethane is smaller than 100 wt% than when the mixture ratio of difluoromethane is 100 wt%. To realize such a configuration, the control unit 44 stores a table in which the relationship between the set number of revolutions, which is a reference for judging whether to perform injection, and the mixture ratio of difluoromethane is described, and the control unit 44 changes control in accordance with the table. Alternatively, the control unit 44 stores a mathematical expression that prescribes the relationship between the set number of revolutions and the mixture ratio of difluoromethane, and the control unit 44 can be configured to change control in accordance with the mathematical expression.

The already described refrigerant circuit 100 of the refrigeration cycle apparatus 1 includes the first expansion valve 25a that decreases the pressure of the refrigerant in the refrigeration cycle. When the mixture ratio of difluoromethane judged by the judgement unit 43 is larger than 50 wt%, the opening degree of the first expansion valve 25a at the time of starting is smaller than when the mixture ratio of difluoromethane is 50 wt%, and, when the mixture ratio of difluoromethane is smaller than 100 wt%, the opening degree of the first expansion valve 25a at the time of starting is larger than when the mixture ratio of difluoromethane is 100 wt%.

The control unit 44 is thus configured to change the control to control that increases the opening degree of the first expansion valve 25a at the time of starting more when, for example, the mixture ratio of difluoromethane is larger than 50 wt% than when the mixture ratio of difluoromethane is 50 wt%, and the control unit 44 is also configured to change the control to control that decreases the opening degree of the first expansion valve 25a at the time of starting more when, for example, the mixture ratio of difluoromethane is smaller than 100 wt% than when the mixture ratio of difluoromethane is 100 wt%.

The control unit 44 may be configured to, for example, increase the opening degree of the first expansion valve 25a at the time of starting by a prescribed percent that is more when the mixture ratio of difluoromethane is 60 wt% and the mixture ratio of pentafluoroethane is 40 wt% than when the mixture ratio of difluoromethane is 50 wt% and the mixture ratio of pentafluoroethane is 50 wt%. The control unit 44 may be configured to, for example, decrease the opening degree of the first expansion valve 25a at the time of starting by a prescribed percent that is more when the mixture ratio of difluoromethane is 80 wt% and the mixture ratio of pentafluoroethane is 20 wt% than when the mixture ratio of difluoromethane is 100 wt%. To realize such a configuration, the control unit 44 stores a table in which the relationship between the opening degree of the first expansion valve 25a at the time of starting and the mixture ratio of difluoromethane is described, and the control unit 44 changes control in accordance with the table. Alternatively, the control unit 44 stores a mathematical expression that prescribes the relationship between the opening degree of the first expansion valve 25a at the time of starting and the mixture ratio of difluoromethane, and the control unit 44 can be configured to change control in accordance with the mathematical expression.

### (3) Modifications

### (3-1) Modification 1A

In the aforementioned embodiment, a case in which both of the first heat source unit 10A and the second heat source unit 10B of the refrigeration cycle apparatus 1 are configured such that heat radiation and heat absorption of the refrigeration cycle are switchable has been described; however, the refrigeration cycle apparatus 1 is not limited to having such a configuration. In the refrigeration cycle apparatus 1, for example, the first heat source unit 10A or the second heat source unit 10B may be an exclusive machine that functions as a heat source whose heat is radiated from the refrigerant, and the utilization units 50 may be exclusive machines each function as a device whose heat is absorbed by the refrigerant. In this case, when the refrigeration cycle apparatus 1 is an air conditioning apparatus, the exclusive machines are machines exclusive for cooling. In the refrigeration cycle apparatus 1, for example, the first heat source unit 10A or the second heat source unit 10B may be an exclusive machine that functions as a heat source whose heat is absorbed by the refrigerant, and the utilization units 50 may be exclusive machines each function as a device whose heat is radiated from the refrigerant. In this case, when the refrigeration cycle apparatus 1 is an air conditioning apparatus, the exclusive machines are machines exclusive for heating.

### (3-2) Modification 1B

In the aforementioned embodiment, a case in which the first heat source unit 10A of the refrigeration cycle apparatus 1 is renewed has been described; however, the technology of the present disclosure is also applicable to a case in which the refrigeration cycle apparatus 1 is newly installed.

### (3-3) Modification 1C

In the aforementioned embodiment, a case in which the refrigerants charged to the refrigeration cycle apparatus 1 are the R410A refrigerant and the R32 refrigerant has been described; however, the refrigerants charged to the refrigeration cycle apparatus 1 are not limited to this combination of the refrigerants. For example, the refrigerants charged to the refrigeration cycle apparatus 1 may be an R452B refrigerant and the R32 refrigerant.

### (3-4) Modification ID

In the aforementioned embodiment, the refrigeration cycle apparatus 1 of a multi type in which the refrigeration cycle apparatus 1 includes the plurality of utilization units 50 has been described. A refrigeration cycle apparatus to which the technology of the present disclosure is applicable is, however, not limited to the multi-type refrigeration cycle apparatus. The technology of the present disclosure is also applicable to, for example, a refrigeration cycle apparatus of a pair type in which one utilization unit is connected to one heat source unit. The number of heat source units connected to the refrigeration cycle apparatus is not limited to one, and a plurality of heat source units may be connected thereto.

### (3-5) Modification IE

In the aforementioned embodiment, a case in which the compressor 11 of the first heat source unit 10A is used as a power source of the transfer of the refrigerant has been described. The power source of the transfer of the refrigerant is, however, not limited to the compressor 11 of the first heat source unit 10A. For example, a refrigerant recovering device that includes a compressor therein may be used for the transfer of the refrigerant.

### (3-6) Modification IF

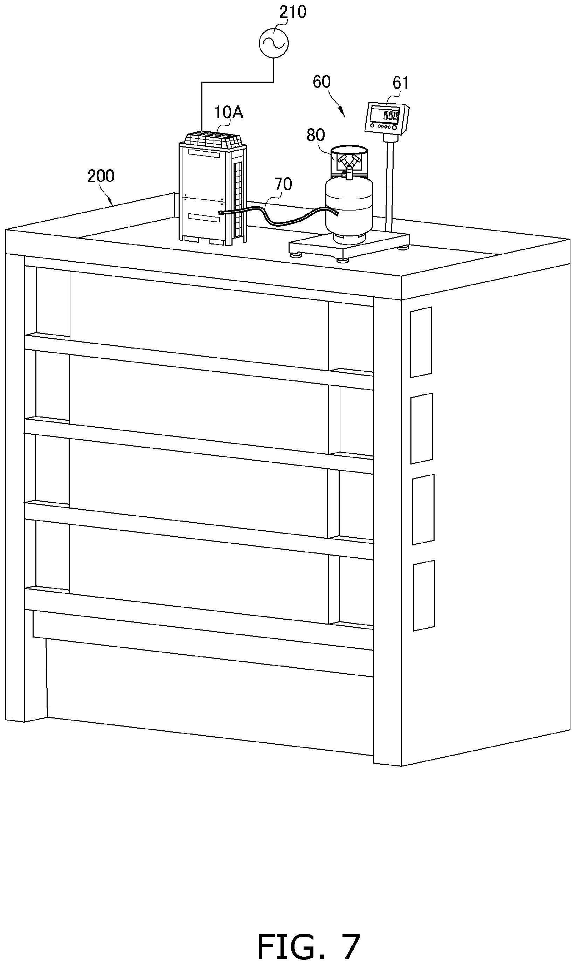

In the aforementioned embodiment, a case in which the refrigerant is directly transferred from the first heat source unit 10A to the second heat source unit 10B has been described; however, as illustrated in Fig. 7, the refrigerant may be once transferred from the first heat source unit 10A to a recovery cylinder 80, and then, the refrigerant may be transferred from the recovery cylinder 80 to the second heat source unit 10B. In this case, it may be configured such that the scale 61 measures the weight of the recovery cylinder 80 before the recovery of the recovered refrigerant into the recovery cylinder 80 and the weight of the recovery cylinder 80 after the recovery of the recovered refrigerant into the recovery cylinder 80 and measures the weight of the recovered refrigerant from a difference between the weights of the recovery cylinder 80 before and after the recovery.

When the recovery cylinder 80 is to be thus used, for example, if the first heat source unit 10A is connected to the power source 210 and operable, the refrigerant of the utilization-side circuit 120 is transferred to the heat-source-side circuit 110 of the first heat source unit 10A through pump down operation. The service port of the high-pressure-side shutoff valve 21 of the first heat source unit 10A and the recovery cylinder 80 are connected to each other by the charge hose 70. As a result of the charge hose 70 being attached to the service port of the high-pressure-side shutoff valve 21 and the recovery cylinder 80, the heat-source-side circuit 110 of the first heat source unit 10A and the recovery cylinder 80 are in communication with each other. Then, the first heat source unit 10A is operated to drive the compressor 11, and the refrigerant is transferred through the service port of the high-pressure-side shutoff valve 21 of the first heat source unit 10A to the recovery cylinder 80. By closing the recovery cylinder 80 and detaching the charge hose 70 from the service port of the high-pressure-side shutoff valve 21 and the recovery cylinder 80, the service port of the high-pressure-side shutoff valve 21 is closed.

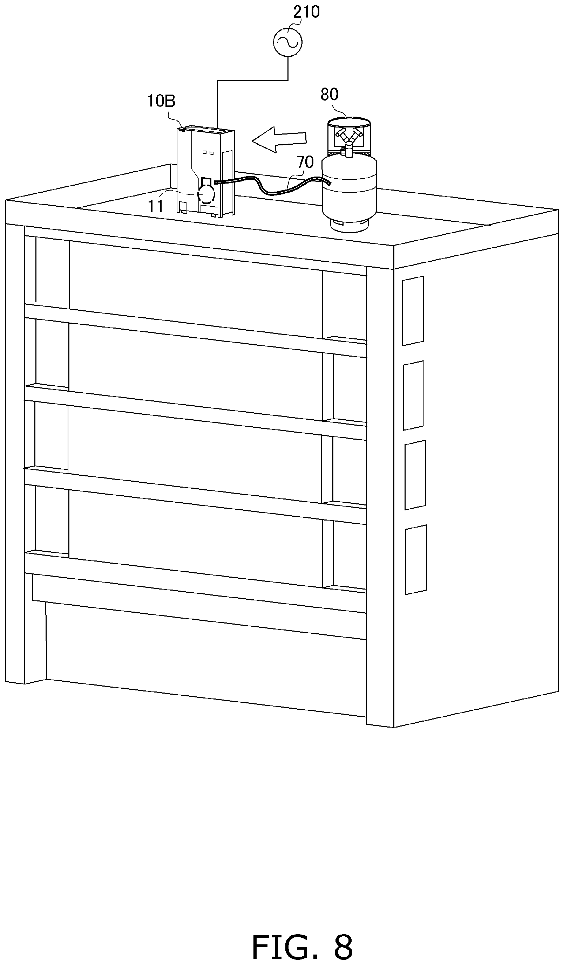

With respect to the refrigeration cycle apparatus 1 after the second heat source unit 10B is incorporated therein, for example, airtightness of the refrigeration cycle apparatus 1 is inspected, and, after the airtightness of the refrigeration cycle apparatus 1 is confirmed, the refrigeration cycle apparatus 1 is evacuated by a vacuum pump. When the recovered refrigerant is to be transferred from the recovery cylinder 80 to the second heat source unit 10B incorporated in the refrigeration cycle apparatus 1, the recovery cylinder 80 and the charge port 23 of the second heat source unit 10B are connected to each other, as illustrated in Fig. 8, by the charge hose 70. As a result of the charge hose 70 being attached to the charge port 23 and the recovery cylinder 80, the heat-source-side circuit 110 of the second heat source unit 10B and the recovery cylinder 80 are in communication with each other. Then, the second heat source unit 10B is operated to drive the compressor 11, and the refrigerant is transferred from the recovery cylinder 80 to the charge port 23 of the second heat source unit 10B. By closing the recovery cylinder 80 and detaching the charge hose 70 from the charge port 23 and the recovery cylinder 80, the charge port 23 is closed.

It may be configured such that the scale 61 measures the weight of the recovery cylinder 80 after the recovery of the recovered refrigerant into the recovery cylinder 80 and the weight of the recovery cylinder 80 after the transfer of the recovered refrigerant from the recovery cylinder 80 to the second heat source unit 10B and measures the weight of the recovered refrigerant from a difference between the weights of the recovery cylinder 80 before and after the transfer.

When the recovery cylinder 80 is used, it is sufficient if the total of the weight of the single refrigerant previously charged in the second heat source unit 10B and the weight of the mixed refrigerant including the recovered refrigerant and the added refrigerant is within a range of a proper gross weight of the refrigerants for the refrigeration cycle apparatus 1 after renewal.

### (3-7) Modification 1G

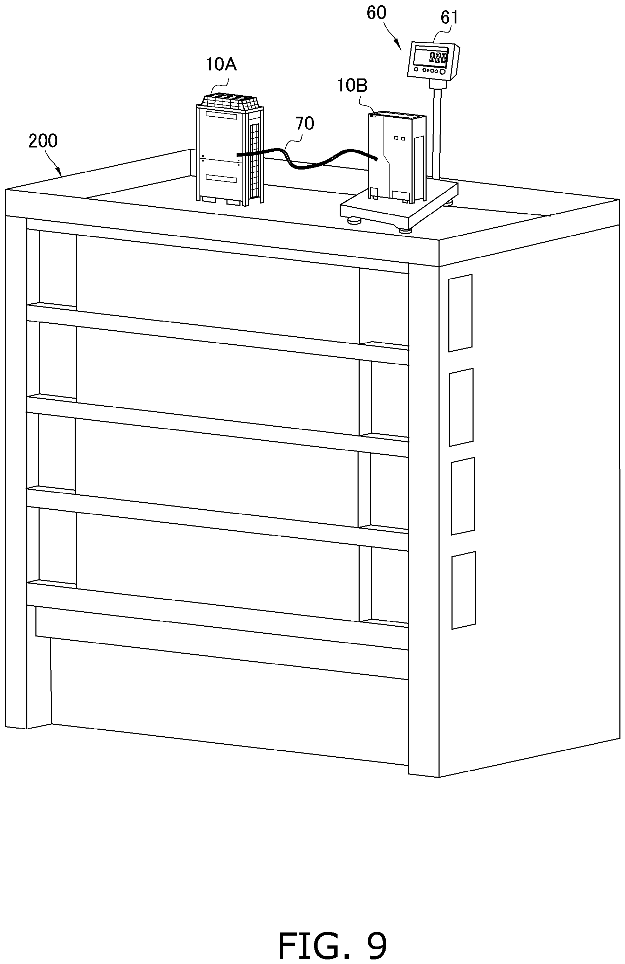

In the aforementioned embodiment, a case in which the weight of the first heat source unit 10A before and after the transfer of the refrigerant to the second heat source unit 10B are measured has been described; however, as illustrated in Fig. 9, the weight of the second heat source unit 10B before and after the transfer of the refrigerant to the second heat source unit 10B may be measured. The weight of the second heat source unit 10B is measured by the scale 61. The scale 61 measures the recovered refrigerant transferred to the second heat source unit 10B by measuring the weight of the second heat source unit 10B both of before the recovered refrigerant is transferred to the second heat source unit 10B and after the recovered refrigerant is transferred to the second heat source unit 10B. It is possible to calculate the weight of the recovered refrigerant by subtracting a measured value obtained by the scale 61 regarding the second heat source unit 10B before the transfer of the recovered refrigerant to the second heat source unit 10B from a measured value obtained by the scale 61 regarding the second heat source unit 10B after the transfer of the recovered refrigerant to the second heat source unit 10B.

In the transfer of the refrigerant from the first heat source unit 10A to the second heat source unit 10B, for example, when the first heat source unit 10A is connected to the power source 210 and operable, the refrigerant of the utilization-side circuit 120 is transferred to the heat-source-side circuit 110 of the first heat source unit 10A through pump down operation. For example, the high-pressure-side shutoff valve 21 is closed, and the first heat source unit 10A is operated to perform cooling. The high-pressure-side shutoff valve 21 is closed, and operation in which the heat-source-side heat exchanger 14 of the first heat source unit 10A functions as a condenser is performed. When the pressure of the low-pressure-side shutoff valve 22 becomes sufficiently low, the low-pressure-side shutoff valve 22 is closed. The service port of the high-pressure-side shutoff valve 21 of the first heat source unit 10A and the charge port 23 of the second heat source unit 10B are connected to each other by the charge hose 70. As a result of the charge hose 70 being attached to the charge port 23 and the service port of the high-pressure-side shutoff valve 21, the heat-source-side circuit 110 of the first heat source unit 10A and the heat-source-side circuit 110 of the second heat source unit 10B are in communication with each other. Then, the first heat source unit 10A is operated to drive the compressor 11, and the refrigerant is transferred through the service port of the high-pressure-side shutoff valve 21 of the first heat source unit 10A to the charge port 23 of the second heat source unit 10B. By detaching the charge hose 70 from the charge port 23 and the service port of the high-pressure-side shutoff valve 21, the charge port 23 and the service port of the high-pressure-side shutoff valve 21 are closed. Since the recovered refrigerant has been transferred in the second heat source unit 10B, the recovered refrigerant in the second heat source unit 10B is charged to the refrigeration cycle apparatus 1 as a result of the second heat source unit 10B being incorporated in the refrigeration cycle apparatus 1.

### (3-8) Modification 1H

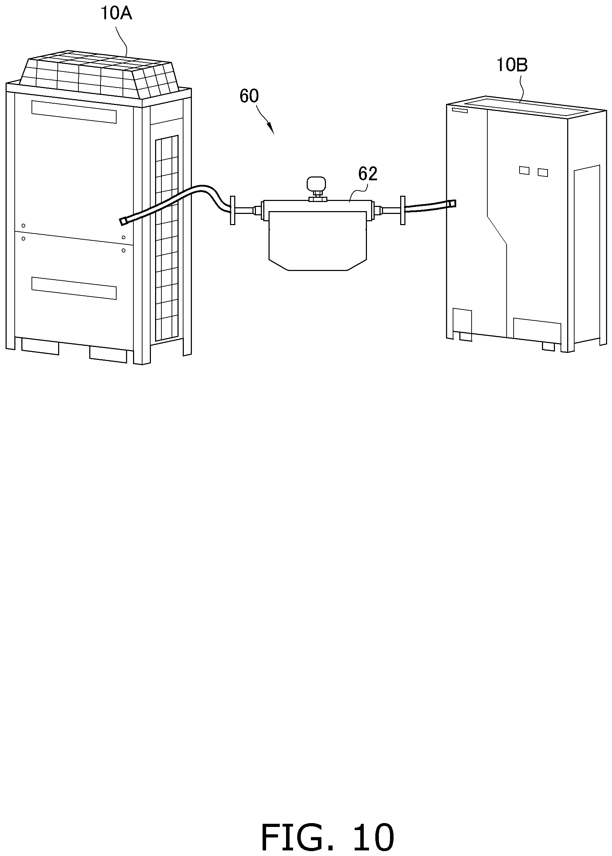

In the embodiment and the modifications mentioned above, a case in which the scale 61 is used to measure the weight of the recovered refrigerant has been described; however, as illustrated in Fig. 10, a mass flow meter 62 may be used to measure the weight of the recovered refrigerant that is transferred from the first heat source unit 10A to the second heat source unit 10B. In this case, the mass flow meter 62 is included in the measurement system 60. The mass flow meter 62 is, for example, a Coriolis flow meter. Using the Coriolis flow meter makes it possible to measure the mass of the recovered refrigerant even when the refrigerant is transferred from the first heat source unit 10A to the second heat source unit 10B in a gas-liquid two-phase state. Considering that a difference of gravitational acceleration on the earth is minute, it is treated in the present disclosure that a measured value (kg) obtained by the mass flow meter 62 is nearly equal to the weight (kgf) of the recovered refrigerant. Measurement using the mass flow meter 62 can be performed in any of a case in which the refrigerant is transferred from the first heat source unit 10A to the second heat source unit 10B with the first heat source unit 10A connected to the power source 210, a case in which the refrigerant is transferred from the first heat source unit 10A to the second heat source unit 10B with the second heat source unit 10B connected to the power source 210, or a case in which the refrigerant is transferred from the first heat source unit 10A to the second heat source unit 10B via the recovery cylinder 80.

### (3-9) Modification 1I

In the refrigerant charging method for the refrigeration cycle apparatus 1 described in the aforementioned embodiment, it is preferable to further include a step of, before recovering the refrigerant from the first heat source unit 10A, operating the already installed refrigeration cycle apparatus 1 and heating the refrigerant in the refrigerant circuit 100.

### (3-10) Modification 1J

It is preferable in the refrigeration cycle apparatus 1 of the aforementioned embodiment that, when the R410A refrigerant and the R32 refrigerant are mixed together and become a circulating refrigerant during charging to the refrigeration cycle apparatus 1 after renewal, the circulating refrigerant be regulated to be non-flammable.

For example, when the initially charged refrigerant is an R410A refrigerant and the single refrigerant is an R32 refrigerant, while pentafluoroethane is non-flammable, the R32 refrigerant (difluoromethane) has flammability, even though slightly; therefore, when the ratio of difluoromethane occupying the circulating refrigerant after charging increases, the circulating refrigerant has a possibility of having slight flammability. Thus, the mixture ratio of difluoromethane and pentafluoroethane at which the circulating refrigerant becomes non-flammable is previously examined, and the upper limit threshold of the mixture ratio of difluoromethane at which it can be judged to be non-flammable is determined in advance. Consequently, when the refrigeration cycle apparatus 1 after renewal is an apparatus intended for a non-flammable refrigerant, the circulating refrigerant is usable as it is. The circulating refrigerant is judged, from the measured weight of the recovered refrigerant and the weight of an R32 refrigerant to be replenished, to be non-flammable when the mixture ratio of difluoromethane occupying the circulating refrigerant is smaller than the upper limit threshold. When the circulating refrigerant can be thus judged to be non-flammable, only the R32 refrigerant is replenished. If it is not possible to judge that the circulating refrigerant is non-flammable, charging is performed such that the circulating refrigerant becomes non-flammable by, for example, adding another refrigerant, such as pentafluoroethane.

### (3-11) Modification 1K

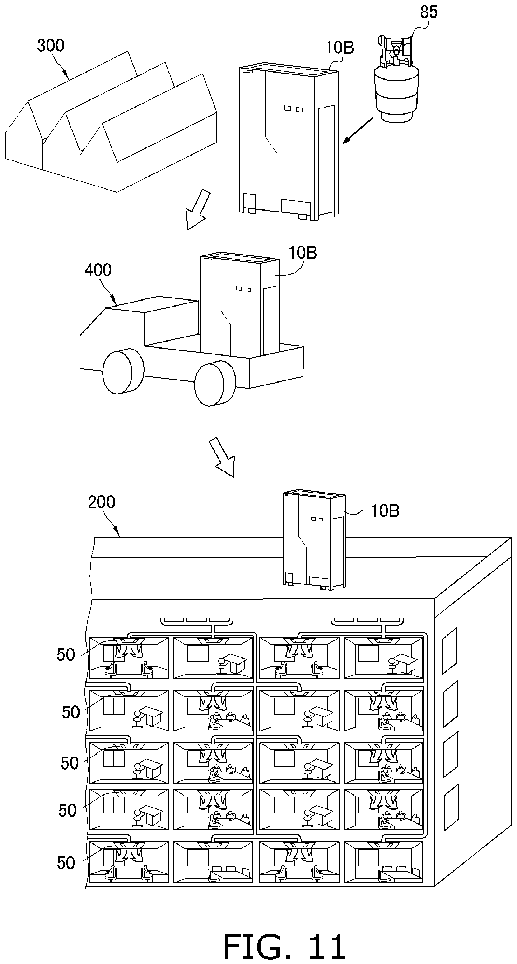

As illustrated in Fig. 11, it may be configured such that, first, the R32 refrigerant prepared in the cylinder 85 or the like is initially charged at a charge location 300, such as a factory, to the second heat source unit 10B. With the R32 refrigerant packed therein, the second heat source unit 10B is transported to the rooftop of the building 200, which is a location where the utilization units 50 is to be connected to configure the refrigerant circuit 100, by using transport means 400, such as a truck and a crane.

The R32 refrigerant initially charged to the second heat source unit 10B is preferably packed to an amount to have an absolute pressure that is more than or equal to the atmospheric pressure at 20°C in the second heat source unit 10B. This is because, when the pressure inside a heat-source-side circuit 110 is more than or equal to the atmospheric pressure, entrance of outside air from outside of the second heat source unit 10B toward inside of the refrigerant circuit 100 becomes difficult. The R32 refrigerant packed in the second heat source unit 10B is preferably packed to an amount to have an absolute pressure that is less than 1 Mpa at 35°C in the second heat source unit 10B. Such a configuration makes it possible to prevent entrance of outside air with a small amount of charging. Further, the pressure of the R32 refrigerant packed in the second heat source unit 10B is preferably less than 200 kPa at a gauge pressure at 20°C. Employing such a configuration makes is possible to prevent entrance of outside air with a smaller amount of charging.

In this case, the R410A refrigerant charged at a local site is the additionally charged refrigerant additionally charged at the time of installation. As the additionally charged refrigerant, for example, the recovered refrigerant is usable. In this case, the judgement unit 43 judges the mixture ratio of difluoromethane on the basis of the composition and the weight of the initially charged refrigerant, which has been previously charged before the additional charge of the refrigerant at the time of the installation of the refrigeration cycle apparatus 1, and the composition and the weight of the additionally charged refrigerant, which is additionally charged at the time of the installation.

In the description with reference to Fig. 11, the initially charged refrigerant is the R32 refrigerant, and the additional refrigerant is the R410A; however, the combination in a modification 1K is not limited to such a combination. For example, the initially charged refrigerant may be a mixed refrigerant in which the mixture ratio of difluoromethane is more than the mixture ratio of pentafluoroethane. The additionally charged refrigerant, which is the mixed refrigerant of difluoromethane and pentafluoroethane, may be a mixed refrigerant in which the mixture ratio of difluoromethane is less than mixture ratio of pentafluoroethane.

In this case, an operator inputs, through the input device 46, the mixture ratio of difluoromethane and the mixture ratio of pentafluoroethane, which are included in the composition of the initially charged refrigerant, together with the weight of the initially charged refrigerant. The operator also inputs, through the input device 46, the mixture ratio of each of difluoromethane and pentafluoroethane, which are included in the composition of the initially charged refrigerant, together with the weight of the additionally charged refrigerant. The judgement unit 43 judges the mixture ratio of difluoromethane occupying the circulating refrigerant on the basis of the composition and the weight of the initially charged refrigerant and the composition and the weight of the additionally charged refrigerant.

### (3-12) Modification 1L

In the embodiment and the modifications mentioned above, a case in which the judgement unit 43 judges the mixture ratio of difluoromethane on the basis of the weights of the plurality of types of refrigerants that are to be charged to the refrigerant circuit 100 has been described; however, it may be configured such that the mixture ratio of difluoromethane is judged on the basis of the discharge temperature of the refrigerant of the compressor 11 in operation under a prescribed condition.

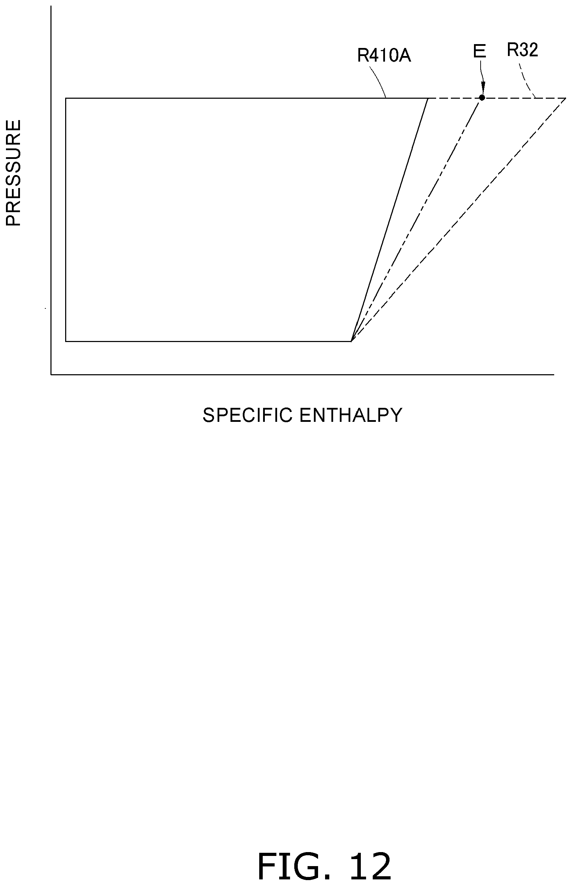

In Fig. 12, the relationship between specific enthalpy and pressure in the refrigeration cycle of the R410A refrigerant is indicated by a solid line, and the relationship between specific enthalpy and pressure in the refrigeration cycle of the R32 refrigerant is indicated by a broken line. In Fig. 12, the relationship between specific enthalpy and pressure in the refrigeration cycle indicated by a dashed line is a relationship of a non-flammable mixed refrigerant in which the mixture ratio of difluoromethane and the mixture ratio of pentafluoroethane are present in the R410A refrigerant and the R32 refrigerant. When the mixture ratio of difluoromethane becomes larger than the state indicated by the dashed line and approximates to the R32 refrigerant, the temperature of the refrigerant discharged from the compressor 11 increases as the mixture ratio of difluoromethane increases. Therefore, the mixture ratio of difluoromethane occupying the mixed refrigerant of difluoromethane and pentafluoroethane can be judged from the temperature (temperature at E point) of the circulating refrigerant discharged from the compressor 11.

To realize a configuration in which the mixture ratio of difluoromethane is judged on the basis of the discharge temperature of the refrigerant of the compressor 11, the refrigeration cycle apparatus 1 includes the discharge temperature sensor 91 mounted at a discharge pipe of the compressor 11. For example, the control unit 44 stores a table in which the relationship between the discharge temperature of the refrigerant of the compressor 11 and the mixture ratio of difluoromethane is described, and it can be configured such that the control unit 44 judges the mixture ratio of difluoromethane in accordance with the table. Alternatively, the control unit 44 stores a mathematical expression indicating the relationship between the discharge temperature of the refrigerant of the compressor 11 and the mixture ratio of difluoromethane, and it can be configured such that the control unit 44 judges the mixture ratio of difluoromethane in accordance with the mathematical expression.

It may be configured such that the judgement unit 43 judges the mixture ratio of difluoromethane on the basis of the discharge superheating degree, instead of the discharge temperature. The discharge superheating degree is, for example, a value obtained by subtracting the saturation temperature of the refrigerant, which is specified by the discharge pressure of the compressor 11, from the discharge temperature. Therefore, even when the discharge superheating degree is used instead of the discharge temperature, it is possible to configure such that the judgement unit 43 judges the mixture ratio of difluoromethane on the basis of the discharge superheating degree.

### (3-13) Modification 1M

In the aforementioned embodiment, a case in which each of the first heat source unit 10A and the second heat source unit 10B is provided with the subcooling heat exchanger 15 has been described; however, the first heat source unit 10A and/or the second heat source unit 10B may not be provided with the subcooling heat exchanger 15.

In addition, a case in which each of the first heat source unit 10A and the second heat source unit 10B is provided with the oil regulator 19 has been described; however, the first heat source unit 10A and/or the second heat source unit 10B may not be provided with the oil regulator 19.

In addition, a case in which each of the first heat source unit 10A and the second heat source unit 10B is provided with the refrigerant regulator 18 has been described; however, the first heat source unit 10A and/or the second heat source unit 10B may not be provided with the refrigerant regulator 18.

In addition, a case in which each of the first heat source unit 10A and the second heat source unit 10B is provided with the oil separator 12 has been described; however, the first heat source unit 10A and/or the second heat source unit 10B may not be provided with the oil separator 12.

### (4) Features

### (4-1)

The refrigeration cycle apparatus 1 of the aforementioned embodiment performs control relating to the refrigeration cycle on the basis of the mixture ratio of difluoromethane. For example, when a refrigerant recovered at a local site is to be charged to the refrigeration cycle apparatus 1 after renewal at the local site and used, there is a case in which, if the recovered refrigerant that is recovered at the local site is insufficient, a refrigerant whose composition differs from the recovered refrigerant is charged. There is also a case in which, as a result of the mixture ratio of difluoromethane in the recovered refrigerant changing with a lapse of time, the ratio of difluoromethane occupying the inside of the refrigeration cycle apparatus after renewal differs from the ratio of difluoromethane in the regular refrigerant in which the recovered refrigerant is not used. In such a case, if judgement of the mixture ratio of difluoromethane that affects the control relating to the refrigeration cycle can be performed by the judgement unit 43, it is possible to properly control the refrigeration cycle and possible to keep the refrigeration cycle apparatus in a normally operable state.

For example, when the mixture ratio of each of difluoromethane and pentafluoroethane occupying the circulating refrigerant is 50 wt%, the refrigeration cycle apparatus 1 can be controlled with control suitable for the R410A refrigerant. For example, when the mixture ratio of difluoromethane and pentafluoroethane occupying the circulating refrigerant is 55 wt% and 45 wt%, respectively, the control suitable for the R410A refrigerant can be switched to control suitable for a case in which the amount of difluoromethane is large. The control can be configured to be switched in an analog manner or can be configured to be switched stepwisely in a digital manner.

### (4-2)

In the refrigeration cycle apparatus 1 of the aforementioned embodiment, the mixture ratio of difluoromethane to perform control relating to the refrigeration cycle on the basis of the mixture ratio of difluoromethane is judged by the judgement unit 43 on the basis of the discharge temperature of the refrigerant of the compressor 11 in operation under a prescribed condition or judged on the basis of the weight of a plurality of refrigerants charged to the refrigerant circuit 100. Such a configuration of the judgement unit 43 enables the judgement unit 43 to easily judge the mixture ratio of difluoromethane that affects the control relating to the refrigeration cycle. As a result, the refrigeration cycle apparatus 1 can easily keep the normally operable state even when the mixture ratio of difluoromethane changes.

### (4-3)

In the aforementioned embodiment, the judgement unit 43 judges the mixture ratio of difluoromethane on the basis of the weight of the R410A refrigerant and the weight of the R32 refrigerant, and the mixture ratio of difluoromethane is thus judged with accuracy. As a result, the control unit 44 can perform the control relating to the refrigeration cycle with accuracy.

### (4-4)

In the aforementioned embodiment, the refrigerant is first recovered from the first heat source unit 10A in which the R410A is charged, the recovered refrigerant is charged as the mixed refrigerant to the refrigeration cycle apparatus 1 after renewal including the second heat source unit 10B, and the R32 refrigerant is additionally charged thereto. In such a case, usually, the mixture ratio of difluoromethane occupying the circulating refrigerant charged in the refrigerant circuit 100 becomes larger than the mixture ratio of pentafluoroethane. When the mixture ratio of difluoromethane occupying the refrigerant charged in the refrigerant circuit 100 thus becomes larger than the mixture ratio of pentafluoroethane, the characteristics of the circulating refrigerant charged in the refrigerant circuit 100 are greatly affected by R32. Therefore, as a result of the control unit 44 of the refrigeration cycle apparatus 1 performing the control relating to the refrigeration cycle on the basis of the mixture ratio of difluoromethane judged by the judgement unit 43, an effect of enabling the refrigeration cycle apparatus 1 to maintain the normal operation of the refrigeration cycle becomes remarkable.

### (4-5)

As described in the aforementioned modification 1K, initial charging is performed at a factory or the like with respect to the second heat source unit 10B, and the judgement unit 43 judges the mixture ratio of difluoromethane on the basis of the composition and the weight of the initially charged refrigerant and the composition and the weight of the additionally charged refrigerant, which have been inputted through, for example, the input device 46. As a result, in the refrigeration cycle apparatus 1, accuracy in the judgement of the mixture ratio of difluoromethane is improved.

### (4-6)

When the initially charged refrigerant described in the aforementioned modification 1K is the R32 refrigerant, and the additionally charged refrigerant is the R410A refrigerant, the judgement unit 43 is not required to obtain information relating to the compositions, and the refrigeration cycle apparatus 1 thus can simplify an operation that judges the mixture ratio of difluoromethane. Moreover, an operator also can save time and labor for inputting information relating to the compositions through the input device 46 or the like.

### (4-7)

In the refrigeration cycle apparatus 1 of the aforementioned embodiment, the number of revolutions of the compressor 11 when the mixture ratio of difluoromethane judged by the judgement unit 43 is larger than a prescribed ratio is larger than the number of revolutions when the mixture ratio is the prescribed ratio. Therefore, even when the mixture ratio of difluoromethane occupying the circulating refrigerant is large, the degree of dryness of the circulating refrigerant sucked by the compressor 11 does not excessively decrease. As a result, a risk of the circulating refrigerant in a liquid phase being sucked by the compressor 11 is reduced, and the refrigeration cycle apparatus 1 can keep the normally operable state.

### (4-8)

In the refrigeration cycle apparatus 1 of the aforementioned embodiment, when the mixture ratio of difluoromethane judged by the judgement unit 43 is larger than 50 wt%, injection into the injection port of the compressor 11 is more frequently performed than when the mixture ratio of difluoromethane is 50 wt%. Therefore, in the refrigeration cycle apparatus 1, even when the mixture ratio of difluoromethane is large, the discharge temperature of the compressor 11 is suppressed by injection, and the temperature of the circulating refrigerant after compression in the refrigeration cycle is suppressed from excessively increasing. In addition, in the refrigeration cycle apparatus 1 of the aforementioned embodiment, when the mixture ratio of difluoromethane is smaller than 100 wt%, injection into the injection port of the compressor 11 is less frequently performed than when the mixture ratio of difluoromethane is 100 wt%. Therefore, in the refrigeration cycle apparatus 1, even when the mixture ratio of difluoromethane is small, excessive injection is suppressed, and a decrease in efficiency due to excessive injection is suppressed.

### (4-9)

The refrigeration cycle apparatus 1 of the aforementioned embodiment includes the first expansion valve 25a that decreases the pressure of the circulating refrigerant in the refrigeration cycle. When the mixture ratio of difluoromethane judged by the judgement unit 43 is larger than 50 wt%, the opening degree of the first expansion valve 25a at the time of starting the compressor is smaller than when the mixture ratio of difluoromethane is 50 wt%, and, when the mixture ratio of difluoromethane is smaller than 100 wt%, the opening degree of the first expansion valve 25a at the time of starting the compressor is larger than when the mixture ratio of difluoromethane is 100 wt%. Therefore, in the refrigeration cycle apparatus 1, even when the state of the refrigeration cycle is changed as a result of a change in the mixture ratio of difluoromethane changing the carried amount of heat carried by the circulating refrigerant, it is possible to suppress a change in the carrying amount of heat. As a result, even when the mixture ratio of difluoromethane changes, the refrigeration cycle apparatus 1 can operate properly.

An embodiment of the present disclosure has been described above; however, it should be understood that various changes in the forms and details are possible without deviating from the gist and the scope of the present disclosure described in the claims.

### Reference Signs List

- 1: refrigeration cycle apparatus
- 10A: first heat source unit
- 11: compressor
- 25a: first expansion valve
- 43: judgement unit
- 44: control unit
- 100: refrigerant circuit
- 110: heat-source-side circuit
- 120: utilization-side circuit

### Citation List

### Patent Literature

PTL 1: Japanese Unexamined Patent Application Publication No. 2003-240388

## Claims

1. A refrigeration cycle apparatus (1) comprising:
a refrigerant circuit (100) that includes a compressor (11) and performs a refrigeration cycle by circulating a refrigerant with the compressor;
a judgement unit (43) that judges a mixture ratio of difluoromethane occupying a refrigerant charged in the refrigerant circuit; and
a control unit (44) that performs control relating to the refrigeration cycle,
wherein the judgement unit judges the mixture ratio of the difluoromethane, and
wherein the control unit performs the control relating to the refrigeration cycle based on the mixture ratio of the difluoromethane judged by the judgement.

2. The refrigeration cycle apparatus (1) according to claim 1,
wherein the judgement unit judges the mixture ratio of the difluoromethane based on a discharge temperature of the refrigerant of the compressor in operation under a prescribed condition, or judges the mixture ratio of the difluoromethane based on weights of a plurality of types of refrigerants to be charged to the refrigerant circuit.

3. The refrigeration cycle apparatus (1) according to claim 1 or claim 2,
wherein refrigerants to be charged to the refrigerant circuit are an R410A refrigerant and an R32 refrigerant, and
wherein the judgement unit judges the mixture ratio of the difluoromethane based on weights of the R410A refrigerant and the R32 refrigerant that are to be charged to the refrigerant circuit.

4. The refrigeration cycle apparatus (1) according to claim 3,
wherein the mixture ratio of the difluoromethane occupying the refrigerant charged in the refrigerant circuit is larger than a mixture ratio of pentafluoroethane occupying the refrigerant charged in the refrigerant circuit.

5. The refrigeration cycle apparatus (1) according to any one of claims 1 to 4,
wherein the judgement unit judges the mixture ratio of the difluoromethane based on a composition and a weight of an initially charged refrigerant that has been previously charged before additional charge of a refrigerant at a time of installation of the refrigeration cycle apparatus, and a composition and a weight of an additionally charged refrigerant that is additionally charged at the time of installation.

6. The refrigeration cycle apparatus (1) according to claim 5,
wherein the initially charged refrigerant is an R32 refrigerant, and the additionally charged refrigerant is an R410A refrigerant.

7. The refrigeration cycle apparatus (1) according to any one of claims 1 to 6,
wherein a lowest number of revolutions of the compressor when the mixture ratio of the difluoromethane judged by the judgement unit is larger than a prescribed ratio is larger than the lowest number of revolutions when the mixture ratio is the prescribed ratio.

8. The refrigeration cycle apparatus (1) according to any one of claims 1 to 7,
wherein the compressor has an injection port between a suction side and a discharge side of a compression chamber and through which an intermediate-pressure refrigerant that is between a high-pressure refrigerant and a low-pressure refrigerant is injected, and
wherein, when the mixture ratio of the difluoromethane judged by the judgement unit is larger than 50 wt%, injection into the injection port is performed more frequently than when the mixture ratio of the difluoromethane is 50 wt%, and, when the mixture ratio of the difluoromethane is smaller than 100 wt%, the injection into the injection port is less frequently performed than when the mixture ratio of the difluoromethane is 100 wt%.

9. The refrigeration cycle apparatus (1) according to any one of claims 1 to 8,
wherein the refrigerant circuit includes an expansion valve (25a) in the refrigeration cycle, and
wherein, when the mixture ratio of the difluoromethane judged by the judgement unit is larger than 50 wt%, an opening degree of the expansion valve at a time of starting the compressor is smaller than when the mixture ratio of the difluoromethane is 50 wt%, and, when the mixture ratio of the difluoromethane is smaller than 100 wt%, the opening degree of the expansion valve at the time of starting the compressor is larger than when the mixture ratio of the difluoromethane is 100 wt%.

10. A method of controlling a refrigeration cycle apparatus (1) including a refrigerant circuit (100) that includes a compressor (11) and performs a refrigeration cycle by circulating a refrigerant with the compressor, the method comprising:
a step of judging a mixture ratio of difluoromethane occupying the refrigerant charged in the refrigeration cycle, and
a step of performing control relating to the refrigeration cycle based on the mixture ratio of the difluoromethane in the refrigerant.
